# EUROPEAN PATENT APPLICATION

(11) **EP 0 814 419 A2**
(43) Date of publication of application: **29.12.1997**
(21) Application number: 97401385.6
(22) Date of filing: 17.06.1997
(51) Int. Cl.: G06F 17/30

(54) **Method of and device for executing a software and medium for distribution**

(30) Priority: 19.06.1996 JP 157878/96
(71) Applicant: Knowledge Information Research Institute, Tsukuba-shi, Ibaraki (JP)
(72) Inventor: Yada, Koji, Musashino-shi, Tokyo 180 (JP)
(74) Representative: Plaçais, Jean-Yves

(57) **Abstract**

By linking a software distribution medium with information located in a network, an access to advertisement information substantially without being limited in its variety and capacity is realized together with good operability.

A software distribution medium 40 to be loaded onto a computer stores an entertainment software 43 and an advertisement software 44. The advertisement software 44 includes plural pieces of advertisement video information 44a and pointer information 44b such as URLs required for accessing information resources located in the information network 100 such as the Internet and related to the advertisement video information 44a. The entertainment software 43 and the advertisement software 44 are played back/executed to display images etc. on a display 20. On an occasion of user's selection operation of certain advertisement video information 44a through an input device 30, an application program such as a Web browser is automatically started up using the corresponding pointer information 44b, and a session for accessing the related information located on the information network 100 is started automatically.

## Description

### BACKGROUND OF THE INVENTION

### Field of the Invention

The present invention relates generally to a technique for executing a software and to a software distribution medium, and more particularly to a technique for executing an entertainment software and a technique effectively applicable to a medium for distributing an entertainment software.

### Related Art Statement

Recently, there has been rapidly spreading utilization of so-called Internet as a computer network covering all over the world. In particular, it is remarkable that there have been spreading wide area information systems such as WWW (World Wide Web) which make it possible to construct hypertext and to access seamlessly all types of information such as character information, graphic information, voice information etc. via pointer information such as URL (Uniform Resource Locator). Similarly, softwares such as so-called Web browsers for accessing those systems have been spreading remarkably.

Also, the Internet is regarded as promising as a medium of advertisement, and there are examined many kinds of advertising methods utilizing the Internet. For example, it is general that a URL of the Internet is published as a part of an advertising page of an ordinary newspaper or magazine to promote access to a WWW server of the advertiser, and more detailed information is provided by his server.

On the other hand, software distribution media such as a home video tape, an optical disk, a CD-ROM, and the like distributed in the market are utilized extensively as advertising media, and it prevails that certain advertising images are mixed into the beginning of an original software of a movie, a game, karaoke, or the like.

Hereupon, in the former case of the conventional technology, a user interested in an advertisement of a certain product must input a URL each time for accessing an information network. Thus, there is a technical problem that operations are troublesome.

In the latter case, contents of advertisement information are fixed to ones at the time of release of the concerned medium, and as a matter of fact it is difficult to change the contents or to add new information. Further, an amount of the information is necessarily limited lest it should suppress the space for the original software to be recorded.

Furthermore, when a user is interested in clothes or an accessory of a person appearing in a movie or a drama being played back from the medium, or in goods such as a piece of furniture in the background set, and wishes to know its manufacturer or a method of obtaining it, there is required troublesome operation such as inquiring of the provider of the software or the like by telephone each time.

### SUMMARY OF THE INVENTION

An object of the present invention is to provide a software execution technique which links software distribution media and information located in a network, and thereby can realize access to advertisement information or added information, which is not limited substantially in its variety and amount of contents, with good operability.

Another object of the present invention is to provide a software distribution medium which is able to increase value added by being linked to information located in an information network.

According to a software execution method of the present invention, a first software and a second software are stored in a software distribution medium, and said second software includes pointer information specifying information resources related to said second software and located in a network. When the first and second softwares are played back or executed to be presented to a user, as for the second software specified by the user, the information resources located in the information network are automatically accessed on the basis of the pointer information, and the information resources related to the second software are provided to the user.

According to another software execution method of the present invention, a software distribution medium stores a first software and a second software, and said second software includes pointer information specifying information resources located in an information network and related to any object included in said first software. When the first software is played back or executed to be presented to a user, as for any object specified by the user in the first software, the information resources located in the information network are automatically accessed on the basis of the pointer information, and the information resources related to the object are provided to the user.

Further, as a software execution device of the present invention, there is provided a hardware for realizing the above-described software execution methods.

Further, a software distribution medium of the present invention stores a first software and a second software, the second software including pointer information specifying an information resource located in a network and related to at least one of the first and second soft wares.

Further, another software distribution medium of the present invention stores a first software and a second software, the latter including pointer information specifying an information resource located in a network and related to any object included in the first software.

The above software distribution media of the present invention may store, in addition to the first and second softwares, at least one of (a) a basic software which controls a software execution device and provides execution environment for the first and second softwares, (b) an application software which executes the first and second softwares, and (c) an application software for accessing the information network.

Other features and advantages of the present invention will become readily apparent from the following description and drawings.

### BRIEF DESCRIPTION OF THE DRAWINGS

In the following, preferred embodiments of the present invention will be described in detail referring to the accompanying drawings, wherein:
Fig. 1 is a conceptual view showing an example of a configuration of a software execution device by which a software execution method is executed as one embodiment of the present invention;
Fig. 2 is a conceptual view showing more completely an example of a configuration of a software execution device as an embodiment of the present invention;
Fig. 3 is a flowchart showing an example of operation of a software execution method and a device as an embodiment of the present invention;
Fig. 4 is a flowchart showing an example of a method of producing a software distribution medium as an embodiment of the present invention;
Fig. 5 is a conceptual view showing an example of a configuration of a variation of a software distribution medium as one embodiment of the present invention;
Fig. 6 is a flowchart showing a method of producing a variation of a software distribution medium as one embodiment of the present invention;
Fig. 7 is a conceptual view showing an example of a configuration of a variation of a software distribution medium as one embodiment of the present invention;
Fig. 8 is a conceptual view showing a variation of a software distribution medium and a software execution method as one embodiment of the present invention;
Fig. 9 is a conceptual view showing an example of a configuration of a variation of a software distribution medium as one embodiment of the present invention; and
Fig. 10 is a flowchart showing a method of producing a variation of a software distribution medium as one embodiment of the present invention.

### DETAILED DESCRIPTION OF THE INVENTION

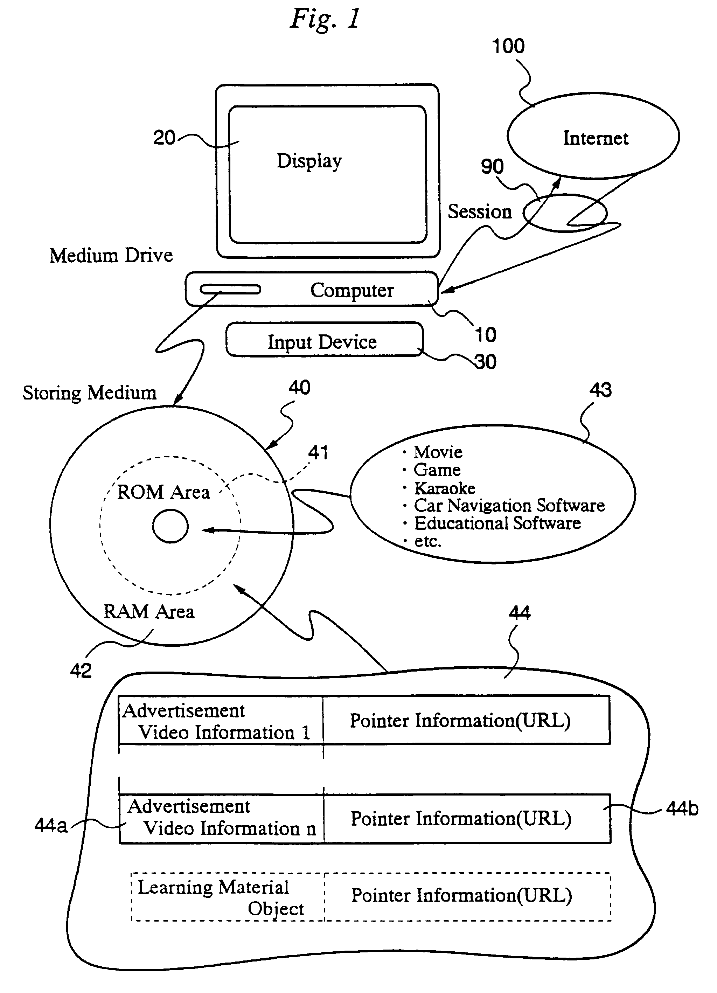

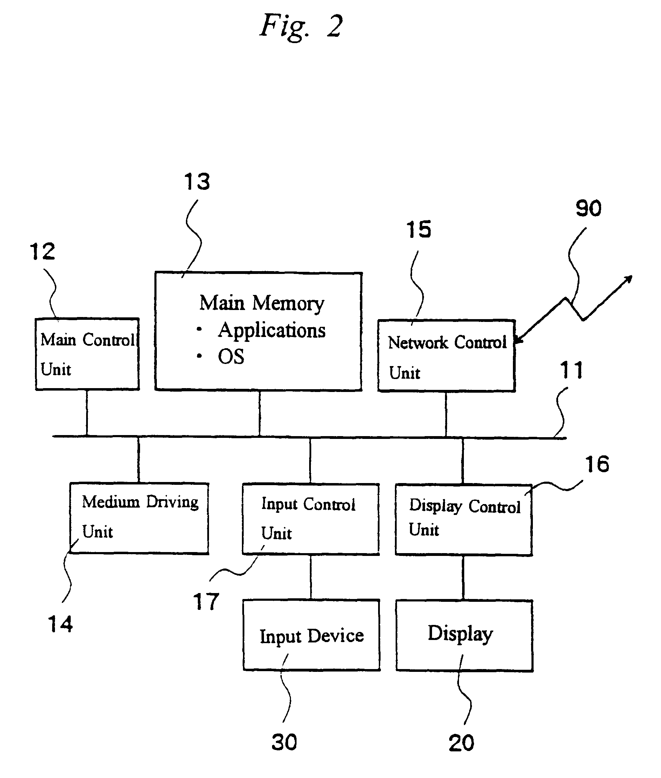

Fig. 1 is a conceptual view showing an example of a configuration of a software execution device by which a software execution method is executed as one embodiment of the present invention, and Fig. 2 is a conceptual view showing the example of a configuration more completely.

The software execution device of the present embodiment comprises a computer 10, and a display 20 and an input device 30, both being connected to the computer 10. As shown in Fig. 2, the computer 10 is constructed so that, to a system bus 11, there are connected a main control unit 12 such as an MPU, a main memory 13 for storing a basic software (OS, operating system) which controls the main control unit 12 and any application program, a medium driving unit 14 which is loaded with a software distribution medium 40 as described below, a network control unit 15 which controls sending and receiving information to and from an outside information network 100 such as the Internet through a communication line 90, a display control unit 16 which controls output of information to the display 20, an input control unit 17 to which the input device 30 is connected, and the like. Although it is not shown, ROM (read only memory) is connected to the system bus 11 and stores a program for executing a boot process of the computer 10 at the times of turning-on and reset.

Here, the communication line 90 is not limited to such communication media as a conductor, an optical fiber, and the like, but includes such communication media as a radio channel, a satellite communication channel, and the like. Further, as the software execution device exemplified in Fig. 1, it is not limited to one which is fixedly installed in a certain location, and one which functions as a so-called mobile terminal such as an automobile information terminal, a portable information terminal, or the like can be used.

In the present embodiment, the software distribution medium 40 is constructed as an MO (magneto-optical disk) or the like, and its storage area is divided into a ROM area 41 and a RAM area 42. In the ROM area, the medium driving unit 14 can not write data and can only read them. On the other hand, in the RAM area, the medium driving unit 14 can write and read data freely.

In the ROM area, there is stored an entertainment software 43 (the first software) such as a movie, a game, karaoke etc. Writing of the entertainment software 43 is carried out by a supplier such as a software maker using a dedicated writing device.

On the other hand, in the RAM area 42 of the software distribution medium 40, there is stored an advertisement software 44 (the second software) in which plural pieces of advertisement video information 44a are set in correspondence with plural pieces of pointer information such as URLs required for accessing information resources located in the information network 100 and related to said advertisement video information 44a.

As to the advertisement software 44, not only the supplier but also a wholesaler in the middle of a distribution channel, a retailer at the end of the channel, or the like, or a user himself who has purchased a software distribution medium 40 may carry out writing, updating, adding etc. of data in the RAM area 42. Namely, not only at the time of production or release of the entertainment software 43, but at any time after the release, the latest information or advertisement information directed to a certain region can be written.

Further, in the case that, instead of the entertainment software 43, an educational software is stored as the first software, it is possible that fundamental teaching materials are provided as the first software, and a teacher etc. optionally sets pointer information such as URLs as the second software to be able to access information resources located in the information network 100 and classified in accordance with learning levels etc. for respective teaching materials.

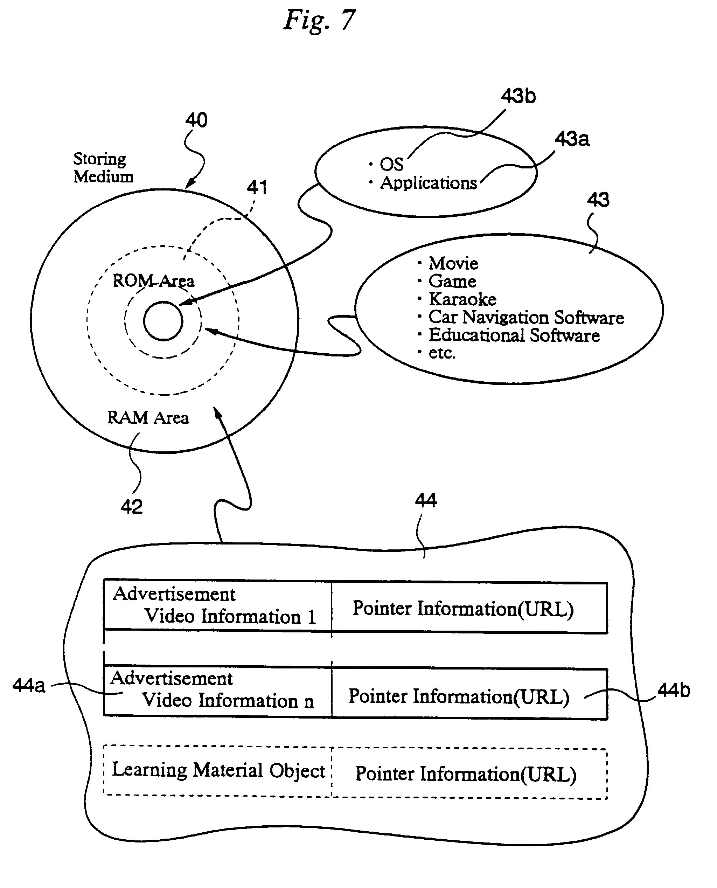

Furthermore, as shown in Fig. 7, in the ROM area 41 of the software distribution medium 40, there may have been written, in advance, a dedicated application program 43a required for executing the entertainment software 43 and for accessing the information network 100 and the basic software 43b (OS) in addition to the entertainment software 43.

Now, an example of the operation of the software execution method and device according to the present embodiment will be described.

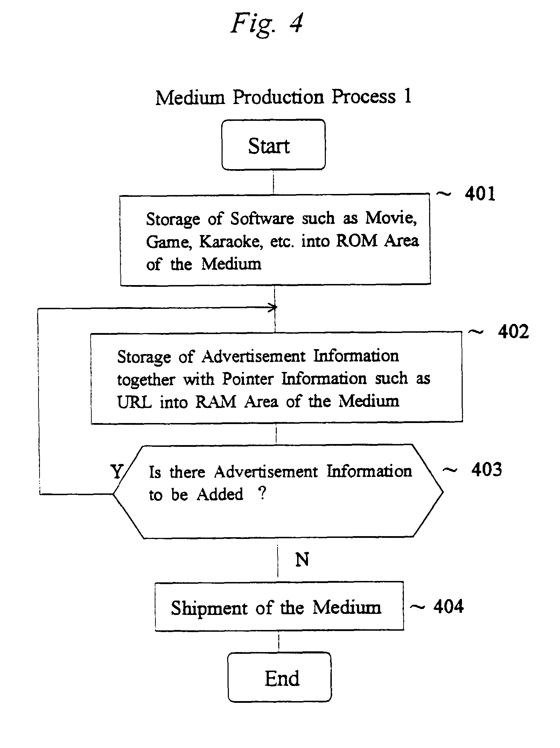

First, referring to Fig 4, an example of a production process of the software distribution medium 40 of the present embodiment, i.e. a writing process of an entertainment software 43 and an advertisement software 44 is described. First, as described above, a process of writing any entertainment software title into the ROM area 41 of the software distribution medium 40 is carried out by a supplier etc. using the dedicated writing device (not shown) (Step 401).

Then, at any time during a distribution channel, the advertisement software 44 is written into the RAM area 42 (Step 402). This writing process of the advertisement software 44 may be repeated as a process of writing, updating, adding, etc., in any number of times and at any point of time if it is after the release of the entertainment software 43 (Step 403).

After going through thus-described writing process of the advertisement software 44 into the RAM area 42, the software distribution medium 40 is shipped and sold to a user (Step 404).

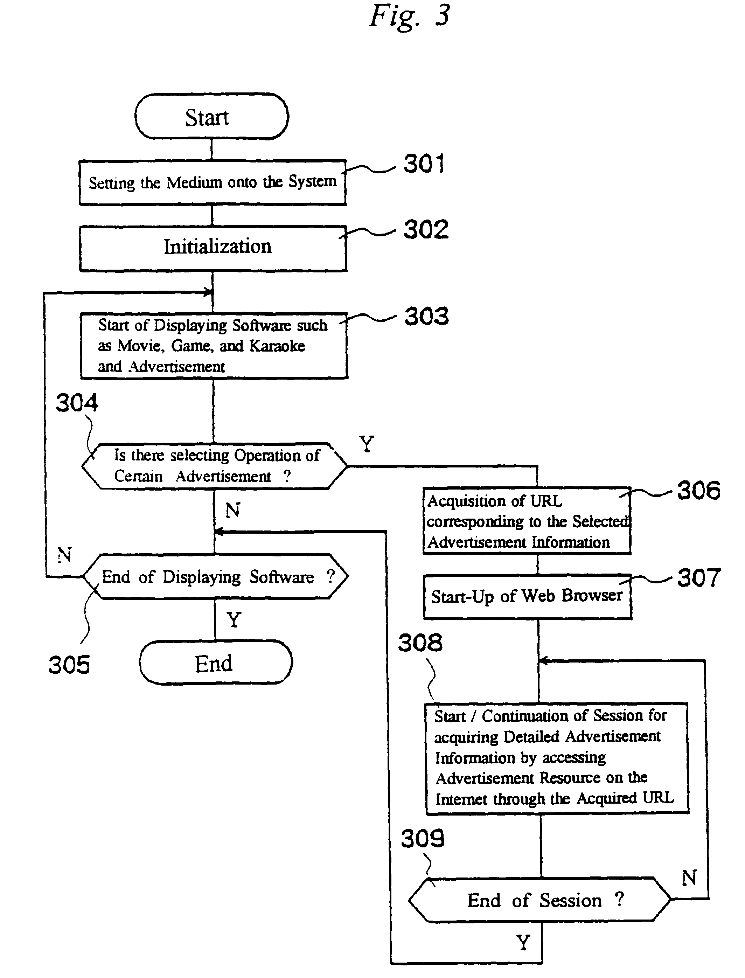

On the other hand, as exemplified in the flowchart of Fig. 3, the software distribution medium 40 obtained by a user is used for example as follows.

Namely, at first, the software distribution medium 40 is loaded onto the medium driving unit 14 (Step 301), and then a required initial process such as starting-up of an application program, which is necessary for executing the entertainment software 43, and reading of the entertainment software 43 is carried out (Step 302) .

In the initial process of the Step 302, when, for example as shown in Fig. 7, the application program 43a such as a Web browser etc. for executing the entertainment software 43 and for accessing the information network 100, and the basic software for operating the computer 10 are stored in the ROM area 41 of the software distribution medium 40, the basic software 43b and the application program 43a are successively loaded into the main memory 13 and executed by the main control unit 12. In other words, a so-called boot process is carried out.

Thereafter, play-back or execution of the entertainment software or the advertisement software 44 is started (Step 303), and images and voice are output to the display 20 to be presented to the user.

Once the play-back or execution of the entertainment software 43 or the advertisement software is started, the main control unit 12 monitors if the user have carried out an select operation through the input device 30 while advertisement video information 44a is presented on the display 20 for example (Step 304) . When a select operation is carried out, pointer information 44b such as a URL corresponding to said advertisement video information 44a is obtained (Step 306). An application program such as a Web browser for example is started up (Step 307), and there is started a session in which information resources in an outside network 100 such as the Internet is accessed through the communication line 90, and detailed information corresponding to said URL and related to the advertisement video information 44a is searched and presented on the display 20 (Step 308). As well known, the object of the session, i.e. the information resources located in a WWW server etc. specified by the URL can be always kept updated by an advertiser who cares for that server etc. and amount of the information is substantially not limited since it is possible to expand the memory medium of the WWW server, without being limited by the storage capacity of the software distribution medium 40. Accordingly, it is possible to provide a user with advertisement information substantially without limit in variety and capacity.

Of course, in this session, not only search/reference of the detailed information related to certain advertisement video information 44a is carried out, but also ordering of a commodity shown in the advertisement information 44a and settlement of its price may be carried out.

When the user indicates an end of the above-described series of session (Step 309), the application program such as the Web browser etc. is ended, the process is returned to the play-back/execution of the original entertainment software 43.

A series of thus-described processes is repeated until the play-back and the execution of the entertainment software 43 and the advertisement software 44 are ended (Step 305).

As described, according to the software execution method and device and the software distribution medium in the form of the present embodiment, an entertainment software 43 and an advertisement software 44 are stored together in the software distribution medium 40, and pointer information 44b such as URLs are set in correspondence with plural pieces of entertainment video information 44a respectively. When the entertainment software 43 and the advertisement software 44 are read from the software distribution medium 40 and played back/executed in the computer 10, information resources located in the network 100 and related to a commodity of the entertainment video information 44a are accessed automatically on the basis of pointer information 44b corresponding to certain advertisement information 44a selected by the user. The information resources are presented to the user, and ordering of the commodity and settlement of its price can be carried out.

Thus, by linking a software distribution medium 40 to information located in an information network 100 such as the Internet, it is possible to access, with good operability, advertisement information which is not limited substantially in its variety and capacity.

Further, by setting an advertisement software rewritable and optional in the RAM area 42 during a distribution channel, it becomes possible to link the software distribution medium 40 to information located in an information network such as the Internet, improving value added of the software distribution medium 40.

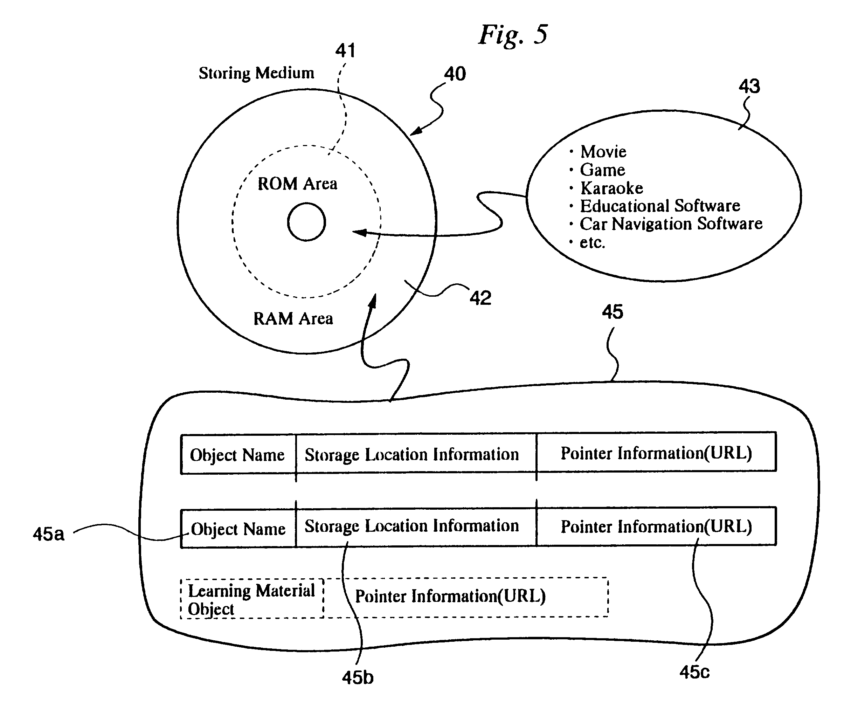

Furthermore, in the above description, there has been exemplified the case that an advertisement software 44 is stored in the RAM area 42 of the software distribution medium 40. However, without being limited to this case, as shown in Fig. 5 for example, in the RAM area 42, there may be stored added information 45 (second software) related to any object which is included in an entertainment software 43 stored in the ROM area 41. Here, "object" means any substance which a user can see or hear.

Namely, the added information 45 may consist of, for example, object names 45a, recording location information 45b of the objects in the ROM area 41 having the concerned object names 45a, pointer information 45c such as URLs required for accessing information located in the information network 100 and related to respective objects.

As the objects, there may be included any image information such as persons appearing in a movie or a game software included in the entertainment software 43, dresses and accessories put on by those persons, properties, scenic articles, background landscapes, pieces of music, effect sounds, any commodities appearing in the images, telops (captioned information) added by the supplier of the software, and the like. As the added information 45, there may be included information of personal histories etc. of actors or characters playing in the movie, game etc., encyclopedic database information about any objects in the images, sales agents and prices, methods of acquisition, etc. of commodities such as dresses and accessories, and the like.

In the case that, instead of an entertainment software 43, map information or car navigation information for example is stored as the first software, as the added information 45, there may be included the latest road conditions (degree of a traffic jam, existence of road repairing) and weather forecasts in designated areas, calling of telephone guidance in the concerned area, life information of restaurants, theaters, shopping, medical institutions, and the like.

Further, in the use for car navigation, when a software execution device functioning as an automobile terminal has a function of acquiring location information of the present latitude and longitude in real time utilizing GPS (Global Positioning System), it may be adapted to access at any time detailed and various information resources relating to certain area specified by said latitude and longitude using pointer information such as URLs included in the second software and set in accordance with latitudes and longitudes.

Further, instead of the entertainment software 43, an educational software may be stored as the first software, and instead of the advertisement software 44, pointer information such as URLs may be stored as the second software for accessing more detailed information resources relating to respective learning items. In this case, the pointer information such as URLs is associated with respective objects such as any learning materials to be presented to a learner who plays the first software. For any learning material object, on the occasion of a learner's operation of specifying certain learning material object at any time, there is started an operation that information resources located in the information network 100 and related to the concerned learning material or learning item is automatically accessed and presented to the learner.

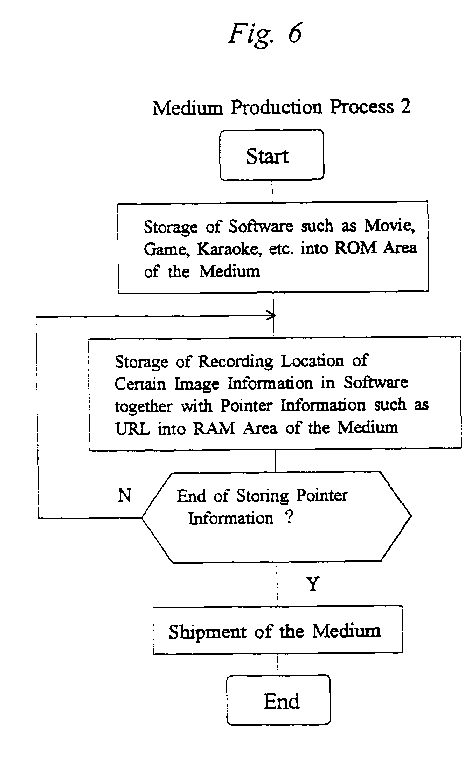

Fig. 6 shows a flowchart of an example of a process of producing the software distribution medium 40 exemplified in Fig. 5. In the case that the entertainment software 43 is a game software, any object included in the program of said game software can be detected by the main control unit 12 during its execution, so that added information 45 can be set while the software is executed in order.

In the case that the entertainment software 43 is video information such as a movie, an operator may store added information 45 in the RAM area 42, for example, by associating recording location information such as a recording location of any scene in which an aimed object appears and an arranged position in the image with pointer information 45c, while playing back the movie in order. In this case, when the movie is played back, if a user seeing that movie carries out a select operation in a scene where certain object appears, he can obtain the pointer information 45c on the basis of the recording location information of the concerned scene in the ROM area 41.

Of course, on an occasion of a user's request, there may be presented auxiliary information indicating which images in the present video scene are registered as the objects, for example, by changing display conditions of the objects or by outputting character information such as telop in the edge of the frame.

Although the cases of Figs. 1 and 5 have been described separately for the sake of convenience, it goes without saying that the advertisement information 44 exemplified in Fig. 1 and the added information exemplified in Fig. 5 may be mixedly stored in the RAM area 42.

As a method of supplying the software distribution medium, it may be supplied in a state that a first software such as an entertainment software 43 and a second software including pointer information etc. are written statically. However, it is not limited to this method, and at least one of the first and second information may be distributed dynamically through any communication line to be provided to a secondary distributor or a user.

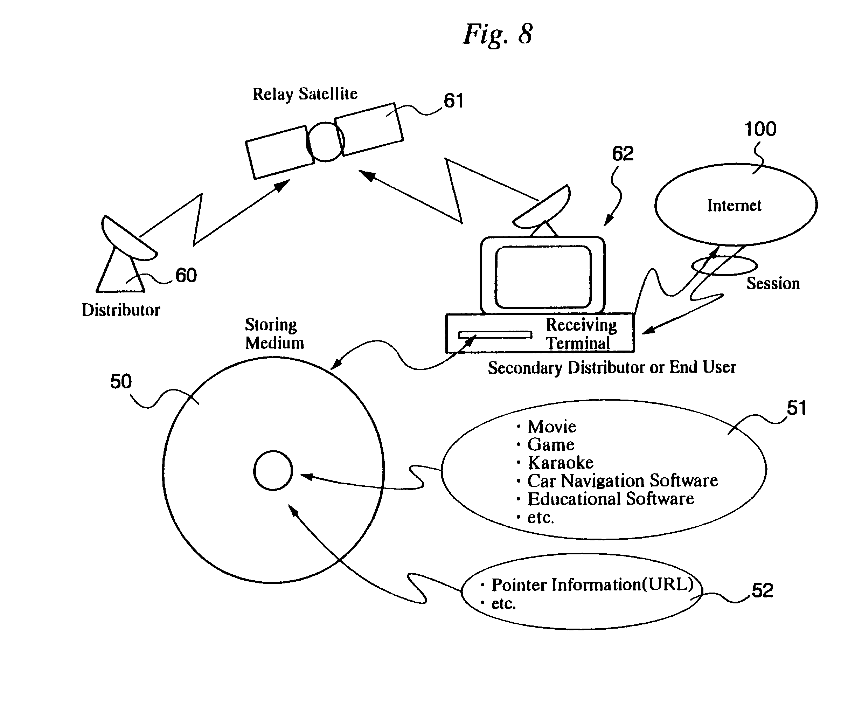

Now, in the following, variational examples of the software execution method and the production method of software distribution medium in the form of the present embodiment will be described. In the example shown in Fig. 8, a first software 51 such as a movie, a game, karaoke, etc. and a second software 52 including pointer information etc. relating to the first software 51 are sent from a distributor 60 through a relay satellite 61 to a receiving terminal 62 of a secondary distributor or an end user, and are written into a software distribution medium 50 in the receiving terminal 62.

In the case of an end user, a software execution device as exemplified in Fig. 1 may be also used as the receiving terminal 62. In that case, an interface function for functioning as the receiving terminal 62 may be added to the construction of Fig. 1 as an option. Further, when a software distribution medium 50 is one in which a part of its storing area can be selectively set as a ROM area, information relating to which area of the software distribution medium 50 is set as a ROM area or which part of the first software 51 and the second software 52 is stored in the ROM area may be transmitted at the time of distribution of the first software 51 and the second software 52.

In the case of a secondary distributor, if necessary, information located in a network 100 such as the Internet may be accessed on the basis of the pointer information such as URLs included in the second software distributed, and the acquired information may be written into a part of the software distribution medium 50. Then, the secondary distributor may duplicate said software distribution medium 50 and supply it to a user. In this case, it is sufficient for the original distributor to distribute only the pointer information which is small in its information quantity, and therefore load on the distribution channel can be lessened.

Further, in the case of the secondary distributor, only the first software 51 may be distributed from the distributor 60, and the secondary distributor may independently write the second software 52. For example, when the second software 52 is advertisement information, the secondary distributor may carry out such an operation as adding advertisement information limited to the area of the secondary distributor.

In Fig. 8, there has been described the case that distribution is made from the distributor 60 through the relay satellite 61 to the receiving terminal 62 of the secondary distributor or the end user. However, the first software 51 and the second software 52 may be distributed through the information network 100 such as the Internet, and written into the software distribution medium 50. In this case, the receiving terminal 62 of the secondary distributor or the end user is required to have, as a communication interface, only a function for accessing the network 100 such as the Internet, and therefore required hardware construction can be simpler.

Further, the distributor 60 may provide a distribution program such as a television program which shows what kinds of first softwares and second softwares are distributed in what time zones in a day. When receiving the distribution, the secondary distributor or the end user may select desired first software 51 and second software 52 on the basis of this distribution program, and the receiving terminal 62 may be adapted to carry out an automatic writing operation of the certain first software 51 and second software 52 into a software distribution medium 50 at the specified time zone.

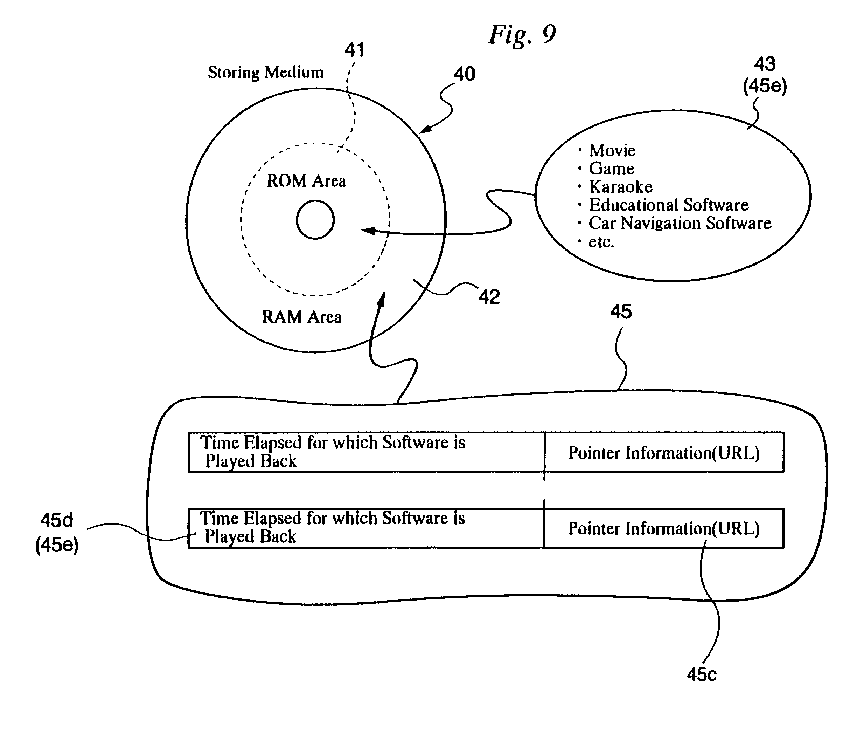

As mentioned above, the pointer information 45c shown in Fig. 5 as an example is set in the image with the object name 45a in the first software such as entertainment software 43 stored in the ROM area 41. The pointer information 45c can also be set in the image with time elapsed 45d for which first software is played back, as illustrated in Fig. 9 for example, said first software including entertainment software 43 stored in the ROM area 41 of a software distribution medium 50 and given software which is output to a display 20 etc. from outside through a communication line 90 by a software execution device shown in Fig. 1 as an example using a software distribution medium 50.

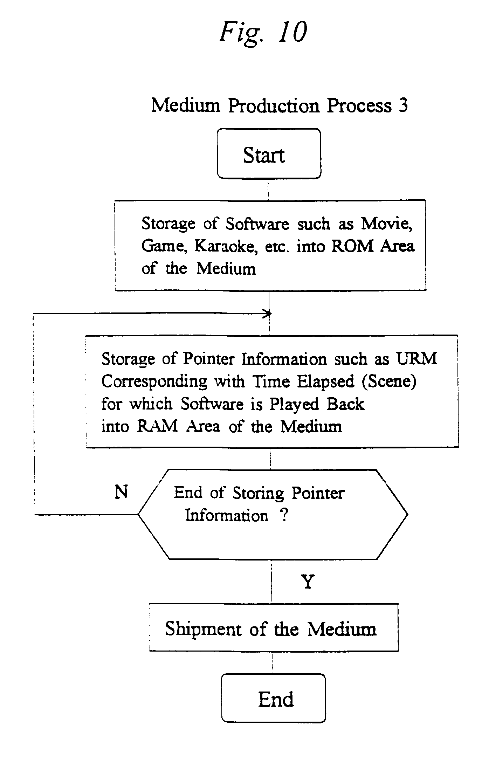

A process of producing the medium for this case is carried out by following a flowchart shown in Fig. 10 as an example. Namely, after storing title information 45e of first software such as entertainment software 43 or software from outside through a communication line 90 into a ROM area 41 or a RAM area 42 of a software distribution medium 40, the first software corresponding with the title information 45e is actually played back. At the same time, each time elapsed for being played back to a given scene, the pointer information 45c to related information located in a network corresponding with the scene is stored, and thereafter the software distribution medium 40 is shipped.

Thereby, when the first software such as entertainment software 43 stored in the ROM area 41 of the software distribution medium 40 or software from outside through a communication line 90 is played back, by the user's execution of a specified operation at a given scene (time elapsed 45d), the related information located in a network is precisely accessed on the basis of the pointer information 45c corresponding with the time elapsed 45d. Accordingly, it is possible to provide the information located in the network corresponding with the given scene (time elapsed 45d) to the user.

Thus, the invention of the present inventors have been described in detail referring to the embodiment of the invention. Of course, however, the present invention should not necessarily be limited to the above-described embodiment, and needless to say can be modified variously within the scope not departing from the technical gist.

For example, the information network is not limited to the Internet, and the invention can be applied broadly to general information networks. Also, the software distribution medium is not limited to a magneto-optical disk, and using of a general mass storage medium such as an optical disk, a magnetic disk, semiconductor memory, and the like is included in the present invention.

According to the software execution method of the present invention, there is attained the effect that, by linking a software distribution medium distributed in the market with information located in a network, an access to advertisement information substantially without limited in its variety and capacity is realized together with good operability.

According to the software execution device of the present invention, there is attained the effect that, by linking a software distribution medium distributed in the market with information located in a network, an access to advertisement information substantially without limited in its variety and capacity is realized together with good operability.

Further, according to the software distribution medium, there is obtained the effect that its value added is increased by linking with information located in a network.

## Claims

1. A software execution method characterized in that:
a first software and a second software are stored in a software distribution medium,
said second software includes a pointer information for specifying an information resource located in an information network and related to the second software, and
when the first and second softwares are played back or executed to be presented to a user, said information resource located in the information network is automatically accessed on the basis of said pointer information specified by the user and related to the second software, and said information resource related to the second software is provided to the user.

2. The software execution method according to Claim 1, wherein said software distribution medium comprises a mass storage medium.

3. A software execution method characterized in that:
a first software and a second software are stored in a software distribution medium, the second software including a pointer information for specifying an information resource located in an information network and related to any object included in the first software, and
when the first software is played back or executed to be presented to a user, as for any object included in the first software and specified by the user, said information resource located in the information network is automatically accessed on the basis of said pointer information, and said information resource related to said object is provided to the user.

4. The software execution method according to Claim 3, wherein said software distribution medium comprises a mass storage medium.

5. A software execution device, comprising:
a display unit for displaying any information in a visualized manner to a user;
a medium driving unit carrying out at least an operation of reading information from a software distribution medium;
a network control unit sending and receiving information to and from an outside through an information network;
a main control unit controlling whole operations;
a main memory for storing a program which controls said main control unit; and
an input device for the user to give instructions to said main control unit,
wherein:
said software distribution medium stores a first software and a second software, the second software including a pointer information specifying an information resource located in the information network and related to the second software, and
when said main control unit plays back or executes the first and second softwares to present them to the user through said display unit, as for the second software specified by the user through said input device, the main control unit carries out an operation of automatically accessing the information resource located in the information network on the basis of the pointer information and of providing the information resource to the user.

6. The software execution device according to Claim 5, wherein said software distribution medium comprises a mass storage medium.

7. The software execution device according to Claim 5, wherein:
said software distribution medium comprises a mass storage medium,
when a storage area of said mass storage medium can be classified as a ROM area for reading only and a rewritable RAM area, said ROM area stores the first software, a basic software for controlling said main control unit, an application software for executing the first software and an application software for accessing the information resource located in the information network, and said RAM area stores the second software, and
at each time when said software distribution medium is loaded onto said medium driving unit, there is carried out a boot operation in which at least the basic software and the application softwares are loaded from the ROM area to said main control unit.

8. A software execution device, comprising:
a display unit for displaying any information in a visualized manner to a user;
a medium driving unit carrying out at least an operation of reading information from a software distribution medium;
a network control unit sending and receiving information to and from an outside through an information network;
a main control unit controlling whole operations;
a main memory for storing a program which controls said main control unit; and
an input device for the user to give instructions to said main control unit,
wherein:
said software distribution medium stores a first software and a second software, the second software including a pointer information specifying an information resource located in the information network and related to any object included in the first software, and
when said main control unit plays back or executes the first software to present it to the user, as for said any object included in the first software and specified by the user through said input device, the main control unit carries out an operation of automatically accessing the information resource located in the information network on the basis of the pointer information and of providing the information resource related to the object to the user.

9. The software execution device according to Claim 8, wherein said software distribution medium comprises a mass storage medium.

10. The software execution device according to Claim 8, wherein:
said software distribution medium comprises a mass storage medium,
when a storage area of said mass storage medium can be classified as a ROM area for reading only and a rewritable RAM area, said ROM area stores the first software, a basic software for controlling said main control unit, an application software for executing the first software and an application software for accessing the information resource located in the information network, and said RAM area stores the second software, and
at each time when said software distribution medium is loaded onto said medium driving unit, there is carried out a boot operation in which at least the basic software and the application softwares are loaded from the ROM area to said main control unit.

11. A software distribution medium characterized in that:
the software distribution medium stores a first software and a second software, and
the second software includes a pointer information which specifies an information resource located in an information network and related to at least one of the first software and the second software.

12. The software distribution medium according to Claim 11, wherein: the software distribution medium further stores at least one of a basic software for controlling a software execution device which provides an execution environment for the first and second softwares, an application software for executing the first and second softwares, and a software for accessing the information network.

13. A software distribution medium characterized in that:
the software distribution medium stores a first software and a second software, and
the second software includes a pointer information which specifies an information resource located in an information network and related to any object included in the first software.

14. The software distribution medium according to Claim 13, wherein: the software distribution medium further stores at least one of a basic software for controlling a software execution device which provides an execution environment for the first and second softwares, an application software for executing the first and second softwares, and a software for accessing the information network.

15. A software execution method characterized in that:
a second software is stored in a software distribution medium, the second software including a pointer information for specifying an information resource located in an information network so that the pointer information corresponds with an information on time for which a first software is played back or executed, and
when the first software is played back or executed to be presented to a user, said information resource located in the information network is automatically accessed on the basis of said pointer information corresponding with said information on time for which said first software is played back or executed when said user executes a specified operation, and said information resource related to said first software is provided to the user.

16. A software distribution medium characterized in that:
the software distribution medium stores a second software, and
the second software includes a pointer information which specifies an information resource located in an information network and which corresponds with an information on time for which a first software is played back or executed.
